**Europäisches Patentamt**

**European Patent Office**

**Office européen des brevets**

(19)

(11) Veröffentlichungsnummer: **0 080 083**
**A2**

(12) ## EUROPÄISCHE PATENTANMELDUNG

(21) Anmeldenummer: **82110103.7**

(51) Int. Cl.³: **F 16 B 11/00**

(22) Anmeldetag: **03.11.82**

(30) Priorität: **20.11.81 DE 3145949**

(43) Veröffentlichungstag der Anmeldung: **01.06.83**
**Patentblatt 83/22**

(84) Benannte Vertragsstaaten: **DE FR GB IT SE**

(71) Anmelder: **BAYERISCHE MOTOREN WERKE Aktiengesellschaft, Postfach 40 02 40 Petuelring 130, D-8000 München 40 (DE)**

(72) Erfinder: **Steinberg, Klaus, Birkenstrasse 17, D-8054 Mauern (DE)**
Erfinder: **Manigold, Robert, Dipl.-Ing., Gollenbergstrasse 9, D-8081 Türkenfeld (DE)**
Erfinder: **Korus, Armin, Eduard Sprangerstrasse 38, D-8000 München 45 (DE)**

(74) Vertreter: **Dexheimer, Rolf, Bayerische Motoren Werke Aktiengesellschaft Postfach 40 02 40 Petuelring 130 - AJ-31, D-8000 München 40 (DE)**

(54) **Verfahren und Vorrichtung zum grossflächigen Verkleben zweier dünnwandiger Bauteile.**

(57) Verfahren zum Verkleben der Außenhaut (2) einer Gepäckraumklappe (1) eines Personenkraftwagens mit einem Verstärkungsteil (3) auf das hierzu eine Vielzahl von relativ nahe beieinander liegender Klebepunkte (5) mit einem Durchmesser von etwa 5 mm aufgetragen und sodann die Außenhaut (2) und das Verstärkungsteil (3) unter Bildung eines die punktartige Anordnung der Klebemasse bewahrenden Abstands (a) zusammengefügt werden. Durch einen an ihren Randbereichen vorgesehenen Bördelrand (4) werden schließlich die Außenhaut (2) und das Verstärkungsteil (3) unlösbar miteinander verbunden.

- 1 -

Verfahren und Vorrichtung zum großflächigen Verkleben zweier dünnwandiger Bauteile

Die Erfindung betrifft ein Verfahren und eine Vorrichtung zum großflächigen Verkleben zweier dünnwandiger Bauteile der im Oberbegriff des Anspruchs 1 angegebenen und als bekannt vorausgesetzten Art.

Nach dem bekannten Verfahren wird beispielsweise der Gepäckraumdeckel eines Personenkraftwagens hergestellt, wobei die Klebemasse ganzflächig, d. h. auf die gesamte, mit der Außenhaut zu verklebenden Oberfläche des Verstärkungsteils aufgetragen wird, so daß zwischen den beiden Teilen eine durchlaufende Klebeschicht vorhanden ist. Der durch die Klebeschicht gebildete Abstand zwischen den einander zugewandten Oberflächen von Außenhaut und Verstärkungsteil dient nicht nur zum Anordnen der Klebeschicht, sondern ist auch fertigungstechnisch gewollt. Denn es ist werkzeugmäßig nicht oder allenfalls mit unvertretbar hohem Aufwand möglich, die gewölbt ausgebildete Außenhaut und das entsprechend gestaltete Verstärkungsteil einer Gepäckraumklappe in Bezug auf ihren Konturenverlauf exakt aneinander anzupassen. Abgesehen davon entstehen beim Zusammenfügen von Außenhaut und Verstärkungsteil, sowie materialbedingt bei Herstellung der Teile häufig Fertigungstoleranzen, durch die sich stellenweise ein ungleich großer Abstand zwischen den Oberflächen von Außenhaut und Verstärkungsteil bildet. Dieser wird durch die Klebeschicht ausgeglichen; eine bereichsweise ungleich dicke Klebeschicht hat

0080083

aber den Nachteil, daß die Klebemasse im Bereich ihrer Anhäufung eine größere Zugkraft hervorruft als an den dünneren Klebemassenstellen. Aufgrund dessen wird die dünner als das Verstärkungsteil ausgebildete Außenhaut der Gepäckraumklappe im Bereich der Klebemassenanhäufung nach Aushärtung der Klebemasse zum Verstärkungsteil hin gezogen, wodurch an der Außenhaut stellenweise unschön wirkende, beulenartige Vertiefungen entstehen. Für eine ganzflächig aufgebrachte Klebeschicht wird darüber hinaus nicht nur viel Klebemasse verbraucht, sondern es erhöht sich dadurch auch das Gesamtgewicht der Klebeteile. Da schließlich eine ganzflächig vorgesehene Klebemasse nicht oder nur sehr kompliziert durch automatische Einrichtungen aufgetragen werden kann, muß dies manuell durchgeführt werden, was sehr zeitaufwendig ist.

Aufgabe der Erfindung ist es daher, ein Verfahren zum großflächigen Verkleben von Teilen der eingangs genannten Art zu schaffen, durch das bei einem relativ geringen Verbrauch von Klebemasse beulenartige Vertiefungen oder dgl. unschön wirkende Ausbildungen an der Außenfläche der Klebeteile verhindert werden, wobei diese aber dennoch - etwa entsprechend der Dicke einer Klebeschicht - im Abstand voneinander angeordnet sind. Nach Ausgestaltungen der Erfindung soll ferner eine Vorrichtung zur rationellen Durchführung des Verfahrens geschaffen werden.

Zur Lösung der Aufgabe sind die im kennzeichnenden Teil des Anspruchs 1 dargelegten Gestaltungsmerkmale vorgesehen, wobei noch in den Unteransprüchen 2 bis 7 für die Aufgabenlösung vorteilhafte Weiterbildungen beansprucht sind.

Die erfindungsgemäß vorgesehenen einzelnen Klebepunkte schnüren sich nach dem Aushärten der Klebemasse taillienförmig ein, wodurch durch diese auf die Klebeteile keine Zugkraft ausgeübt wird und damit an der Außenfläche der Klebeteile keine beulenartige Vertiefungen entstehen können. Dabei muß die Größe und Anzahl der Klebepunkte sowie deren Abstand voneinander an die jeweilige Dimensionierung der Klebeteile angepaßt werden. Durch die punktartige Anordnung der Klebemasse können vorteilhafterweise aus Blech bestehende Klebeteile an ihrer einander zugewandten und im Abstand von beispielsweise 2 mm liegenden Oberflächen mit Lack beschichtet werden, so daß sie nicht korrodieren können. Da ferner die Klebemasse nur punktartig aufgetragen wird, verringert sich - neben der Einsparung von Klebemasse - gegenüber einem ganzflächigen Klebeauftrag auf das Gewicht der Klebeteile. Sofern konstruktiv möglich, kann ferner auch ein oder beide Klebeteile zwischen den Klebepunkten mit Ausnehmungen versehen werden, so daß auch hierdurch das Gewicht der Klebeteile vermindert wird. Durch die nach einer Ausgestaltung der Erfindung vorgesehene Vorrichtung zur Durchführung des erfindungsgemäßen Verfahrens können schließlich die Klebepunkte sehr rationell aufgetragen werden.

In Ausgestaltung der Erfindung ist vorgesehen, daß die Klebepunkte jeweils einen Durchmesser von etwa 5 mm haben und im Abstand von etwa 18 mm voneinander angeordnet sind.

Verschiedene andere Ausgestaltungen der Erfindung sind in den Unteransprüchen gekennzeichnet.

Ein Ausführungsbeispiel der Erfindung ist in der Zeichnung dargestellt und wird im folgenden erläutert. Es zeigt:

Fig. 1    eine Gepäckraumklappe im Schnitt, deren Außenhaut mit dem innenliegenden Verstärkungsteil durch eine Anzahl von Klebepunkten verbunden ist,

Fig. 2    eine perspektivische Draufsicht auf die Gepäckraumklappe in Pfeilrichtung X von Fig. 1, mit teilweise weggelassener Außenhaut.

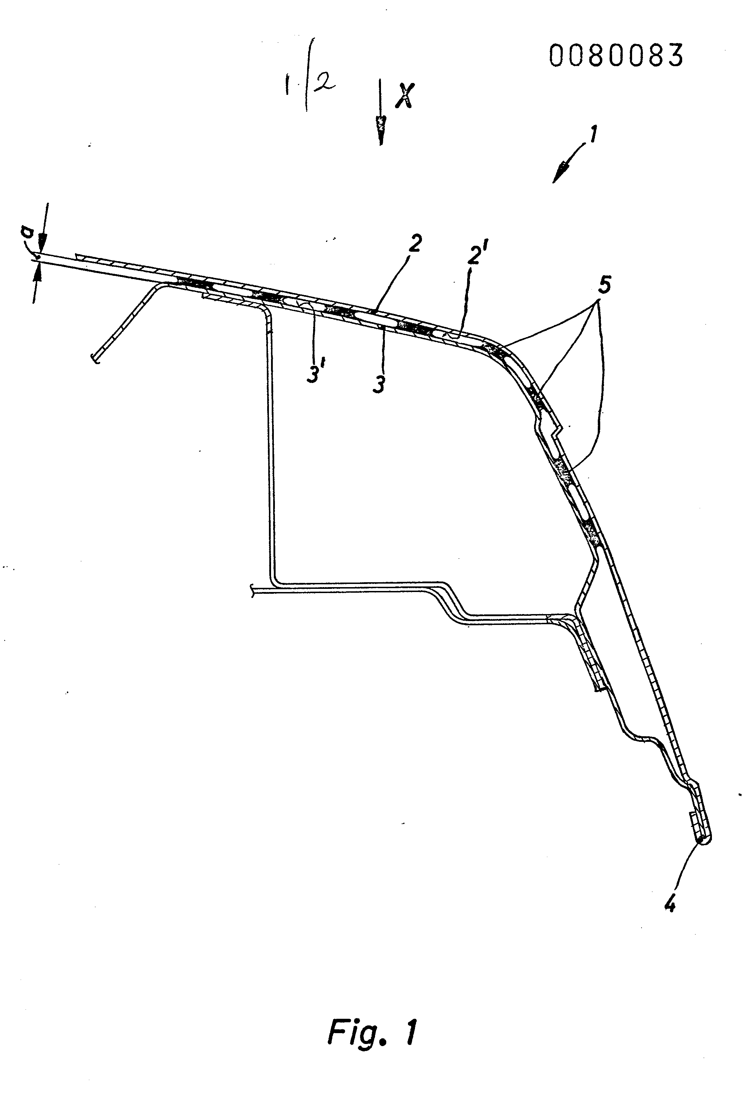

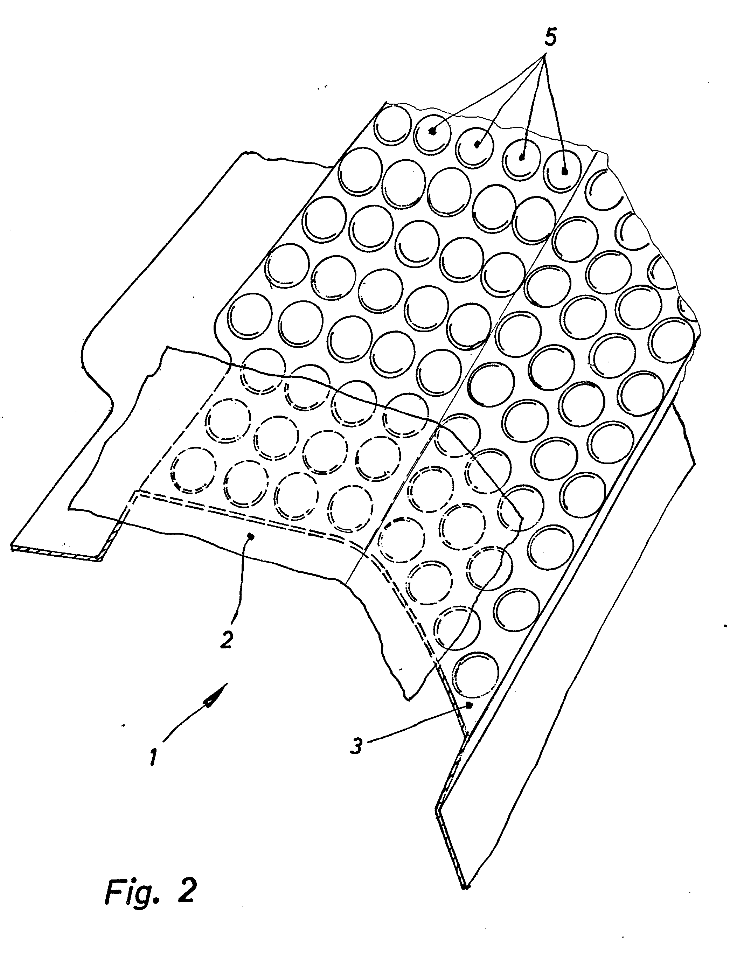

Die in den Fig. 1 und 2 dargestellte Gepäckraumklappe 1 eines Personenkraftwagens weist eine in einem Vertikalschnitt gewölbt ausgebildete Außenhaut 2 und ein Verstärkungsteil 3 auf, das etwas dicker ist als die Außenhaut 2 und das mit dieser durch einen umlaufenden Bördelrand 4 verbunden ist. Wie in Fig. 1 ersichtlich, weist das Verstärkungsteil 3 einen entsprechend der Wölbung der Außenhaut 2 verlaufenden Krümmungsabschnitt auf, wobei die Außenhaut 2 und das Verstärkungsteil 3 derart miteinander durch den Bördelrand 4 verbunden sind, das im Bereich des Krümmungsabschnitts des Verstärkungsteils 3 zwischen dessen Oberfläche 3' und der zugewandten Oberfläche 2' der Außenhaut 2 ein konstruktiv festgelegter, unveränderbarer Abstand a, der etwa 2 mm beträgt, gebildet ist.

Das Verstärkungsteil 3 ist im Bereich seines Krümmungsabschnitts mit der Außenhaut 2 für eine unlösbare, dauerhafte Verbindung mit dieser verklebt, wobei auf die Oberfläche 3' des Verstärkungsteils 3 die Klebemasse als eine Vielzahl von Klebepunkten 5 (Fig. 2) - welche jeweils einen Durchmesser von etwa 5 mm haben - aufgetragen, sodann das Verstärkungsteil 3 und die Außenhaut 2 zusammengefügt und die beiden Teile schließlich durch Erzeugung des Bördelrandes 4 miteinander unlösbar verbunden werden, während die Masse der Klebepunkte 5 aushärtet. Durch den dabei zwischen den einander zugewandten Oberflächen 2', 3' von Außenhaut 2 und dem Krümmungsabschnitt des Verstärkungsteils 3 vorgesehenen, wie erwähnt konstruktiv festgelegten, unveränderbaren Abstand a ist gewährleistet, daß der Durchmesser der einzelnen, im Abstand von etwa 18 mm voneinander angeordneten Klebepunkten 5 im wesentlichen entsprechend der ursprünglich aufgetragenen Größe erhalten bleibt, also die einzelnen Klebepunkte 5 nicht untereinander zusammenfließen können. Da durch die Klebepunkte 5 nach Aushärten der Klebemasse eine starre Verbindung zwischen Verstärkungsteil 3 und Außenhaut 2 geschaffen ist, kann diese beim Betrieb eines Personenkraftwagens nicht flattern.

Nach dem Aushärten der Klebemasse schnüren sich die einzelnen Klebepunkte 5 über ihre Höhenerstreckung taillienförmig ein, so daß durch sie vom Verstärkungsteil 3 auf die Außenhaut 2 keine Zugkraft ausgeübt wird; somit kann die Außenhaut 2 nicht deformiert werden. Zur Gewichtserleichterung kann das Verstärkungsteil 3 zwischen den Klebepunkten 5 mit Ausnehmungen versehen sein. Selbstverständlich kann der Durchmesser der Klebepunkte 5, ihr Abstand voneinander sowie das Abstandsmaß a zwischen der Außenhaut 2 und dem Verstärkungsteil 3 variieren; die Maße sind jeweils auf die zu verklebenden Teile abzustimmen.

Die Klebepunkte 5 werden in rationeller Weise auf den Krümmungsabschnitt des Verstärkungsteils 3 durch eine nicht dargestellte Vorrichtung aufgetragen, welche ein Lochblech aufweist, dessen einzelne Löcher entsprechend den am Verstärkungsteil 3 vorgesehenen Klebepunkten 5 ausgebildet und angeordnet sind, d. h. einen Durchmesser von etwa 5 mm und einen Abstand von etwa 18 mm voneinander haben. Ferner führt zu jedem Loch des Lochblechs ein als ein Gummischlauch, Düse oder dgl. ausgebildeter Speiser, in den taktweise die für einen Klebepunkt 5 erforderliche Menge Klebemasse, welche etwa 0,3 g beträgt, von einem Vorratsbehälter eingespeist wird.

- 1 -

Patentansprüche:

1. Verfahren und Vorrichtung zum großflächigen Verkleben zweier dünnwandiger Bauteile, insbesondere der Außenhaut eines schwenkbaren Karosserieteils wie Gepäckraumklappe oder dgl. mit einem innenliegenden Verstärkungsteil, wobei auf eines der dünnwandigen Bauteile die Klebemasse aufgetragen, sodann die Bauteile zusammengefügt und durch eine an ihren Randbereichen vorgesehene unlösbare Verbindung wie Schweißnaht, Bördelrand oder dgl. derart zueinander festgelegt werden, daß beim anschließenden Aushärten der Klebemasse die dünnwandigen Bauteile auf Abstand gehalten werden, dadurch gekennzeichnet, daß zunächst auf eines der dünnwandigen Bauteile eine Vielzahl von relativ nahe beieinander liegender Klebepunkte (5) aufgetragen, sodann die beiden Bauteile unter Bildung eines die punktartige Anordnung der Klebemasse im wesentlichen bewahrenden Abstands (a) zwischen ihren einander zugewandten Oberflächen (2', 3') zusammengefügt und schließlich an ihren Randbereichen die unlösbare Verbindung vorgesehen wird.

2. Verfahren nach Anspruch 1, dadurch gekennzeichnet, daß die Klebepunkte jeweils einen Durchmesser von etwa 5 mm haben.

3. Verfahren nach Anspruch 1 oder 2, dadurch gekennzeichnet, daß die Klebepunkte (5) im Abstand von etwa 18 mm voneinander angeordnet sind.

4. Verfahren nach Anspruch 1, dadurch gekennzeichnet, daß der Abstand (a) zwischen den einander zugewandten Oberflächen (2', 3') der zu verklebenden Bauteile etwa 2 mm beträgt.

5. Dünnwandige Bauteile, welche nach dem Verfahrensanspruch 1 miteinander verklebt werden, dadurch gekennzeichnet, daß wenigstens eines der dünnwandigen Bauteile zwischen den Klebepunkten (5) mit Ausnehmungen versehen ist.

6. Vorrichtung zur Durchführung des Verfahrens nach Anspruch 1, dadurch gekennzeichnet, daß die Vorrichtung zum Auftragen der Klebepunkte (5) hauptsächlich ein Lochblech aufweist, wobei die Größe der Löcher und deren Abstand voneinander den jeweils an einem Bauteil anzuordnenden Klebepunkten entspricht.

7. Vorrichtung nach Anspruch 6, dadurch gekennzeichnet, daß zu jedem Loch des Lochblechs ein Speiser, wie Gummischlauch, Düse der dgl. führt, in den taktweise die Klebemasse von einem Vorratsbehälter entsprechend der für einen Klebepunkt (5) erforderlichen Menge eingespeist wird.

0080083

*Fig. 1*

**Fig. 2**